# FASCICULE DE BREVET EUROPEEN

(11) **EP 3 173 761 B1**
(45) Date de publication et mention de la délivrance du brevet: **06.01.2021**
(21) Numéro de dépôt: 16197758.2
(22) Date de dépôt: 08.11.2016
(51) Int. Cl.: G01M 3/18, G01K 7/34, G01M 3/16, H01B 7/32

(54) **CABLE ELECTRIQUE COAXIAL, DISPOSITIF DE DETECTION EQUIPE D'UN TEL CABLE POUR DETECTER UNE FUITE DE FLUIDE S'ECHAPPANT D'UNE CONDUITE ET PROCEDE DE DETECTION ASSOCIE**
ELEKTRISCHES KOAXIALKABEL, MIT EINEM SOLCHEN KABEL AUSGESTATTETE DETEKTIONSVORRICHTUNG ZUM AUFFINDEN VON FLÜSSIGKEITSLECKS, DIE AUS EINER LEITUNG AUSTRETEN, UND ENTSPRECHENDES DETEKTIONSVERFAHREN
COAXIAL ELECTRICAL CABLE, DETECTION DEVICE PROVIDED WITH SUCH A CABLE FOR DETECTING A FLUID LEAK FROM A PIPE AND ASSOCIATED DETECTION METHOD

(30) Priorité: 24.11.2015 FR 1502455
(43) Date de publication de la demande: 31.05.2017
(73) Titulaire: Airbus Helicopters, 13725 Marignane Cedex (FR)
(72) Inventeur: CHUC, Charles, 13320 Bouc Bel Air (FR); IMBERT, Nicolas, 13008 Marseille (FR); COLMAS, Jean-Philippe, 13480 Cabries (FR)
(74) Mandataire: GPI & Associés

(56) Documents cités:
- WO-A1-93/25883
- DE-B- 1 134 532
- US-A- 4 877 923
- US-A- 4 910 998
- US-A- 4 965 412
- US-A1- 2005 159 915

## Description

La présente invention se rapporte au domaine de la détection des fuites d'un fluide caloporteur circulant à l'intérieur d'une conduite permettant l'acheminement de ce fluide.

L'invention concerne plus particulièrement un câble électrique coaxial destiné à cheminer le long de la conduite et permettant de former un capteur sensible à une fuite de fluide s'échappant de la conduite.

Par exemple, un tel câble peut être relié à un réflectomètre temporel pour former un dispositif de détection selon l'invention pour détecter une fuite de fluide sur une conduite d'un aéronef. En effet, il est primordial sur un aéronef de détecter le plus rapidement possible toute fuite de fluide caloporteur pour éviter les accidents liés notamment à un incendie ou une explosion se produisant à la suite d'une fuite de fluide s'échappant accidentellement de la conduite.

En effet, ce type de conduite peut être utilisé pour prélever de l'air issu des moteurs de l'aéronef à une température d'environ 500°C. Le fluide circulant dans une telle conduite peut alors comporter des vapeurs de carburant pouvant être fortement inflammables.

Une telle conduite peut par exemple cheminer jusqu'au cockpit de l'aéronef, s'étendre sur 5 à 10 mètres de long dans le cas d'un giravion jusqu'à plus de 30 mètres de long dans le cas d'un avion et comporter une pluralité de raccordements ou jonctions entre différents tronçons de conduite. Ainsi, c'est d'une part au niveau de ces raccordements qu'il y a un risque important de fuite et d'autre part au niveau des points de solidarisation de la conduite avec le châssis de l'aéronef.

De façon générale, il est connu d'équiper ce type de conduites avec des dispositifs de détection de fuites comportant une pluralité de thermocouples ou de thermistances disposés ponctuellement le long de la conduite. Un tel dispositif a notamment été décrit dans le document US2006020415. Cependant, cette solution est problématique car elle ne permet pas de détecter une fuite sur toute la longueur de la conduite mais uniquement au niveau de plusieurs points ou zones de cette conduite.

En outre, plus on multiplie le nombre de zones de détection plus cette solution est onéreuse puisque pour chaque zone de détection il est nécessaire de prévoir deux fils électriques et une carte d'acquisition comportant autant d'entrées/sorties qu'il y a de zones de détection sur la conduite.

Ainsi, une telle solution de détection de fuite est très complexe à installer sur un aéronef car elle comporte un nombre important de fils électriques à solidariser avec l'aéronef et à connecter avec les thermocouples et la carte d'acquisition du dispositif de détection. Tous ces fils et connections font également qu'une telle solution est peu fiable et lourde.

Enfin, une telle solution ne permet pas un contrôle aisé du dispositif de détection et elle nécessite de débrancher un nombre important de connections électriques pour par exemple contrôler ou remplacer la carte d'acquisition du dispositif de détection.

Par ailleurs, tel que présenté dans le document EP0544367, une autre solution consiste à utiliser un capteur capacitif linéaire avec un câble électrique coaxial agencé a proximité de la conduite le long d'un tronçon de cette conduite.

En effet, un tel capteur capacitif linéaire peut présenter une longueur maximale de 1 à 2 mètres et ne s'étendre que sur une longueur limitée de la conduite qui peut atteindre 7 à 8 mètres par exemple. Comme avec des thermocouples, il est donc nécessaire d'utiliser une pluralité de capteurs capacitifs linéaires pour détecter une fuite sur toute la longueur de la conduite.

De plus, les capteurs capacitifs linéaires doivent être connectés à leurs deux extrémités avec une carte d'acquisition et forment donc des boucles cheminant sur une longueur réduite de la conduite en faisant un aller et un retour au niveau d'une même zone de détection. Il en résulte, comme pour les thermocouples, un nombre important de connections électriques, compliquant ainsi l'installation et la fiabilité de cette solution de détection de fuite

Le document US4877923 décrit un câble détecteur pour la détection de fuites de liquide pour des pipelines et des réservoirs de stockage au sol. Le câble détecteur comprend un premier et un deuxième conducteurs électriques chacun sensiblement coaxial l'un par rapport a l'autre. Le premier conducteur est un conducteur à âme conductrice et le deuxième conducteur possède une structure suffisamment poreuse pour permettre le passage de produits liquides et d'eau. Une première couche d'isolant est adjacente au premier conducteur. La matière de cette première couche d'isolant est suffisamment poreuse pour permettre le passage des produits liquides et suffisamment hydrophobe pour être imperméable a l'eau. Une deuxième couche d'isolant est placée entre ladite première couche d'isolant et le deuxième conducteur. Cette deuxième couche d'isolant est perméable a l'eau, et une enveloppe isolante protectrice qui est suffisamment poreuse pour permettre le passage de l'eau et de produits liquides. Cette enveloppe constitue la partie extérieure du câble, de sorte que chaque couche extérieure successive entoure la couche intérieurement précédente. Le diamètre du câble est de 3,429mm (0.135 inch).

Le document US4965412 décrit un câble électrique coaxial pour les systèmes numériques et ordinateurs. Ce câble électrique coaxial est compact et léger tout en visant à offrir des spécifications électriques et physiques comparables à des câbles plus volumineux et lourds. Le câble électrique coaxial comprend un conducteur fait d'un métal conducteur entouré par une couche d'isolant électrique. Un écran en fils conducteurs entoure l'isolant et possède des fils largement espaces. Un autre écran conducteur est prévu. Une gaine protectrice en polymère entoure le câble électrique coaxial. L'isolant est en PTFE expansé poreux et environ 10-55% de la surface de l'isolant sont recouverts par les fils dudit écran en fils conducteurs. L'écran conducteur est en PTFE chargé d'argent ou en PTFE chargé de carbone.

Le document US2005159915 décrit un dispositif de détection formant une installation d'alarme de surchauffe et d'incendie pour des conduites de distribution d'air chaud provenant de moteurs d'un avion de ligne. Le dispositif de détection pour une installation d'alarme incendie ou de surchauffe pour un avion, destine à la détection le long d'une ligne de mesure d'un emplacement, auquel se produit un changement de température. Le signal d'alimentation est un signal à hyperfréquences. Une électronique d'évaluation est reliée au générateur de signaux, l'électronique d'évaluation présente un mélangeur pour le mélange du signal d'alimentation au signal de réponse, afin de former un signal de fréquence différentielle. Le signal de fréquence différentielle renferme une information de distance et l'électronique d'évaluation est conçue pour déterminer l'emplacement du changement de température sur la base de cette information de distance

Le document DE1134532 décrit quant à lui un dispositif électrique de surveillance de température, en particulier pour surveiller la température de câbles d'alimentation électrique et de câbles haute tension. Un tel dispositif décrit en outre dans un câble coaxial, l'utilisation d'un matériau diélectrique solide agencé entre deux conducteurs et dont la constante diélectrique change en fonction de la température.

Un objet de l'invention défini par la revendication 1 propose un dispositif permettant de s'affranchir des limitations mentionnées ci-dessus en proposant une solution simple, sûre et efficace pour détecter une fuite de fluide sur une conduite, notamment celle d'un aéronef. Un autre objet de l'invention est un giravion défini par la revendication 13. Par exemple, au moins une conduite de fluide du dispositif de détection comporte une pluralité de tronçons de conduite et de raccordements entre différents tronçons de la conduite.

L'invention se rapporte donc à un câble électrique coaxial comportant une âme centrale conductrice de l'électricité, un diélectrique isolant de l'électricité recouvrant l'âme centrale et une tresse de blindage conductrice de l'électricité recouvrant le diélectrique.

Un tel câble électrique coaxial est remarquable en ce que le diélectrique isolant de l'électricité est formé dans un matériau apte à se transformer à une température supérieure à 300°C et en ce que la tresse de blindage comporte un taux de recouvrement compris entre 30 et 50%.

Autrement dit, les caractéristiques physiques structurelles d'un tel câble électrique coaxial changent à une température supérieure à 300°C. Il en résulte alors une modification d'au moins une caractéristique électrique, telle que l'impédance, de ce câble et ce, au niveau de la fuite de fluide. Un tel câble est par exemple réalisable sur de grandes longueurs et peut ainsi former un capteur unique s'étendant sur toute la longueur de la conduite.

Le taux de recouvrement compris entre 30 et 50% de la tresse de blindage est optimal de façon à, d'une part garantir une protection mécanique du câble suffisante telle que par exemple en conférant au câble une limite d'élasticité en traction supérieure ou égale à 100 newtons par millimètres carrés et adaptée aux conditions d'utilisation de ce câble ainsi que, d'autre part, permettre une détection rapide de la fuite de fluide dont la température permet de transformer la nature du matériau formant le diélectrique.

Un tel taux de recouvrement de la tresse de blindage est par exemple défini comme étant le rapport entre la surface utile occupée par les brins formant la tresse de blindage et la surface extérieure du diélectrique recouverte partiellement par la tresse de blindage. La surface utile de la tresse de blindage est alors ajourée au niveau de certains croissements entre les brins formant la tresse et forme une couche poreuse permettant, en cas de fuite de fluide, une transmission rapide de la chaleur du fluide au diélectrique qui est non-poreux.

La combinaison du choix du matériau utilisé pour former le diélectrique du câble et du choix de taux de recouvrement de la tresse de blindage est donc primordiale pour parvenir à effectuer une détection rapide d'une fuite sur cette conduite.

En outre, le matériau formant le diélectrique étant solide à une température inférieure à 300°C, la transformation de ce matériau à une température supérieure à 300°C peut consister en un ramollissement, une fusion ou encore une sublimation de ce matériau.

Avantageusement, le matériau formant le diélectrique isolant de l'électricité peut être du Polytétrafluoroéthylène (PTFE).

En effet, un tel matériau possède un point de fusion de l'ordre de 325°C ce qui permet une transformation du matériau formant le diélectrique du câble à une température supérieure à 300°C.

En pratique, le diélectrique peut comporter une épaisseur comprise entre 0,01 et 2 mm (millimètres).

Puisque la valeur basse des plages l'épaisseur proposées par l'invention (i.e. de 0.01mm), est précisé à titre d'exemple, que cette valeur basse correspond à l'épaisseur d'un simple adhésif, avec laquelle une détection fonctionne parfaitement, e.g. à un seuil de température plus bas. Tandis que la valeur haute (2mm) correspond par exemple à une réalisation où le capteur avec sa protection est obtenu par extrusion. Cas dans lequel il est favorable d'avoir une épaisseur plus importante, afin d'obtenir une couche efficace de produit isolant par extrusion.

De telles épaisseurs de matériau diélectrique sont en effet optimales pour effectuer une détection rapide d'une fuite de fluide. L'épaisseur du matériau diélectrique peut par exemple être ajustée de manière à avoir une détection plus ou moins rapide et sensible de la température du milieu environnant à proximité du câble électrique coaxial.

Cette épaisseur est alors avantageusement mesurée radialement entre l'âme centrale et la tresse de blindage lorsque le câble comporte une section circulaire.

Par exemple, de nombreux procédés de fabrications sont envisageables pour produire un tel type de câble coaxial.

En effet selon un premier exemple de réalisation, le diélectrique peut être formé par un ruban enroulé autour de l'âme centrale.

Un tel assemblage du diélectrique avec l'âme centrale est appelé un guipage. Le ruban est ainsi guipé avec l'âme centrale du câble puis un recuit peut être effectué pour permettre de joindre les spires de la spirale formée par le ruban autour de l'âme centrale. Lors de ce recuit, de la chaleur est transmise au ruban qui fond puis durcit une fois revenu à température ambiante.

Selon un second exemple de réalisation, le diélectrique peut être formé par un tube creux extrudé autour de l'âme centrale.

Dans ce cas, l'assemblage entre le diélectrique et l'âme centrale est obtenu par exemple par un procédé d'extrusion ou de pultrusion dans lequel le matériau formant le diélectrique passe au travers d'une filière avec l'âme centrale.

Par exemple, la tresse de blindage peut comporter une pluralité de brins tressés entre eux, chaque brin étant formé par un fil de cuivre étamé.

De façon connue, un tel étamage des brins de la tresse permet notamment de protéger le cuivre de sa corrosion par l'air ambiant. L'âme centrale étant quant à elle protégée par le diélectrique, un tel étamage n'est pas nécessaire pour celle-ci et cette âme peut être formée par un monofilament de cuivre uniquement.

En outre, la tresse de blindage peut comporter x fuseaux tressés entre eux composés chacun de y brins, le nombre x de fuseaux étant compris entre 6 et 10 fuseaux et le nombre y de brins de chaque fuseau étant compris entre 3 et 10 brins.

Une telle tresse de blindage est alors suffisamment résistante aux sollicitations mécaniques propres aux aéronefs et permet de garantir une bonne tenue dans le temps d'un tel câble électrique coaxial.

Avantageusement, la tresse de blindage peut comporter une pluralité de brins tressés entre eux, chaque brin comportant un diamètre compris entre 0,05 et 0,25 mm (millimètre).

De façon préférentielle, une telle tresse de blindage peut comporter 8 fuseaux de 3 brins, chacun des brins comportant un diamètre de 0,12mm (millimètre).

Comme déjà évoqué, l'invention se rapporte également au dispositif de détection pour détecter une fuite de fluide le long d'une conduite de fluide, une telle conduite de fluide permettant la circulation d'un fluide caloporteur sur un aéronef, le dispositif de détection comportant au moins un réflectomètre temporel.

Un tel dispositif de détection est remarquable en ce qu'il comporte au moins un câble tel que décrit précédemment, le câble comportant une bague de connexion agencée au niveau d'une première extrémité du câble. Une telle bague de connexion permet de connecter électriquement le réflectomètre temporel avec le câble pour émettre une impulsion de test dans le câble et analyser une impulsion réfléchie par le câble. Par exemple, un tel câble électrique coaxial s'étend le long et à proximité de la conduite de fluide et comporte une seconde extrémité libre agencée du côté opposé à la première extrémité du câble.

Autrement dit avec un tel dispositif de détection, l'élément sensible à la température formé par le câble ne décrit pas une boucle mais s'étend linéairement le long de la conduite. Seule la première extrémité du câble est reliée électriquement avec le réflectomètre.

De cette manière, le dispositif de détection peut identifier l'occurrence d'une discontinuité d'impédance et déterminer sa position linéique dans le câble. Une telle discontinuité d'impédance provoque en effet une modification de l'impulsion réfléchie par le câble et est ensuite analysée par le réflectomètre temporel pour connaitre la position linéique dans le câble ou encore sa distance par rapport au réflectomètre temporel.

Ainsi, une seule connexion est nécessaire pour connecter électriquement la première extrémité du câble avec le réflectomètre temporel. La seconde extrémité du câble peut quant à elle être simplement recouverte avec un capuchon protecteur permettant d'éviter tout court circuit ou faux contact électrique involontaire entre l'âme centrale et la tresse.

La bague de connexion permet quant à elle de faciliter le raccordement ou la coupure électrique entre le réflectomètre temporel et le câble lors de la mise en place du dispositif sur un aéronef ou lors d'une opération de maintenance sur le dispositif de détection ou sur la conduite.

En outre, pour s'étendre le long de la conduite, le câble peut décrire différentes trajectoires.

Ainsi, selon une première variante de l'invention, le câble peut s'étendre parallèlement par rapport à la conduite de fluide.

Un tel agencement parallèle permet en effet de limiter au minimum la longueur de câble utilisée pour couvrir toute la longueur de la conduite.

Selon une seconde variante de l'invention, le câble peut s'étendre en formant une spirale autour de la conduite de fluide.

Une telle spirale peut alors être continue ou discontinue le long de la conduite. Elle peut également comporter localement une variation du pas des spires pour augmenter/réduire la zone de détection sur certains tronçons de la conduite. Ainsi, dans des zones critiques de la conduite où des fuites peuvent apparaitre, le pas des spires peut être réduit. Au contraire, dans les zones de la conduite peu sollicitées mécaniquement le pas des spires de la spirale peut être localement augmenté.

La présente invention a aussi pour objet un procédé de détection permettant de détecter une fuite de fluide le long d'une conduite de fluide au moyen d'un dispositif de détection tel que décrit précédemment.

Un tel procédé de détection est en outre remarquable en ce qu'il comporte :
- une étape d'émission pour émettre une impulsion de test dans le câble, l'étape d'émission étant réalisée au moyen d'un réflectomètre temporel,
- une étape de réflexion pour réfléchir au moins partiellement l'impulsion de test et générer l'impulsion réfléchie par le câble puis
- une étape d'analyse pour analyser l'impulsion réfléchie, pour identifier une discontinuité d'impédance dans le câble et pour déterminer une position dans le câble de cette discontinuité d'impédance.

En d'autres termes, un tel procédé permet de détecter une fuite de fluide sur toute la longueur d'une conduite de fluide équipant un aéronef. Un tel procédé de détection comporte ainsi un dispositif de détection incluant un réflectomètre temporel permettant d'émettre une impulsion de test dans le câble puis d'analyser l'impulsion réfléchie par le câble.

L'étape d'analyse de l'impulsion réfléchie permet alors d'identifier une discontinuité d'impédance dans le câble et de déterminer sa position le long de la conduite pour éventuellement procéder ultérieurement au remplacement d'une portion de conduite défectueuse ou cassée.

En pratique, la discontinuité d'impédance peut être obtenue par une transformation selon l'invention du matériau formant le diélectrique isolant de l'électricité recouvrant l'âme centrale du câble électrique coaxial, ladite transformation du matériau se produisant à une température supérieure à 300°C et préférentiellement à une température comprise entre 400°C et 500°C.

Dans ce cas l'étape de réflexion du procédé de détection est obtenue par une modification des caractéristiques structurelles du câble. La transformation du matériau formant le diélectrique peut ainsi consister en une fusion voir une sublimation de celui-ci et engendrer localement une diminution de l'épaisseur du diélectrique. Il en résulte alors un rapprochement entre l'âme centrale et la tresse de blindage et par suite une discontinuité de l'impédance localisée au niveau de la fuite de fluide uniquement.

L'invention et ses avantages apparaîtront avec plus de détails dans le cadre de la description qui suit avec des exemples donnés à titre illustratif en référence aux figures annexées qui représentent :
- la figure 1, une vue schématique de côté d'un aéronef équipé d'un dispositif de détection de fuites conforme à l'invention,
- la figure 2, une vue de détail de côté illustrant plus précisément le cheminement d'un câble agencé le long d'une conduite, conformément à l'invention,
- la figure 3, une vue en perspective d'un câble électrique coaxial conforme à l'invention,
- les figures 4 et 5, deux exemples de réalisation distincts d'un diélectrique protégeant une âme centrale conductrice, conformément à l'invention, et
- la figure 6, un schéma de principe du procédé de détection conforme à l'invention.

Les éléments présents dans plusieurs figures distinctes sont affectés d'une seule et même référence.

Comme déjà évoqué, l'invention se rapporte à un dispositif de détection d'une fuite sur une conduite d'un fluide caloporteur équipant un aéronef.

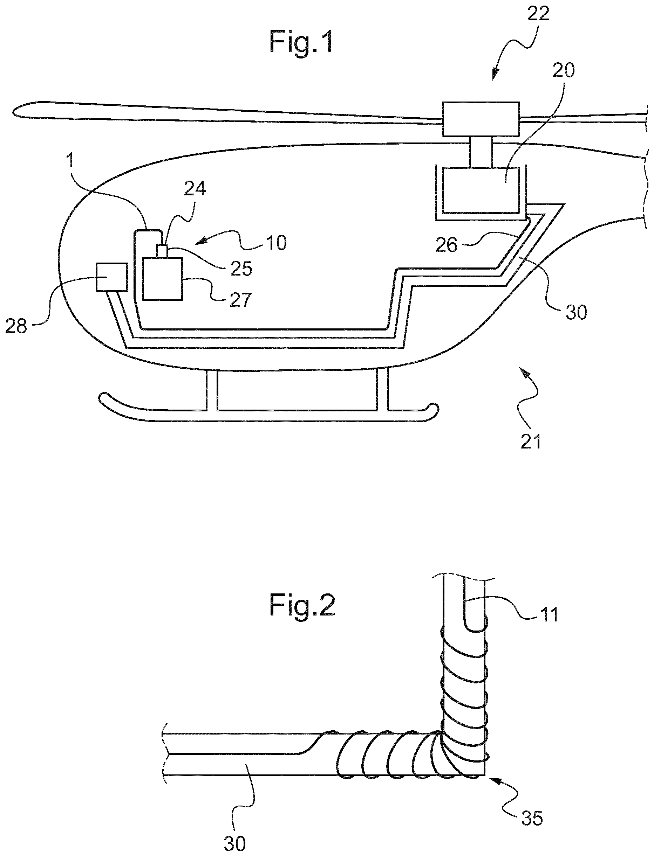

Tel que représenté à la figure 1, l'aéronef 21 équipé d'un tel dispositif de détection 10 peut avantageusement être un giravion. Un groupe de motorisation 20 permet alors d'entraîner en rotation un rotor 22 permettant de générer la sustentation et/ou la propulsion de cet aéronef 21.

A partir de ce groupe de motorisation 20 une conduite 30 permet d'acheminer un fluide caloporteur à l'intérieur du cockpit de l'aéronef 21 vers, par exemple, un échangeur de chaleur 28 permettant de chauffer l'air intérieur du cockpit de l'aéronef 21.

Un tel dispositif de détection 10 comporte alors un câble électrique 1 s'étendant parallèlement le long et à proximité de la conduite 30. Le câble 1 comporte en outre au niveau d'une première extrémité 25 une bague de connexion 24 permettant de connecter électriquement le câble 1 avec un réflectomètre 27.

Un tel réflectomètre 27 permet alors d'émettre une impulsion de test dans le câble 1, cette impulsion de test se propageant depuis la première extrémité 25 en direction d'une seconde extrémité 26 du câble 1.

L'impulsion de test est ensuite réfléchie dans le câble 1 et retourne en direction de la première extrémité 25 du câble 1.

Lorsqu'une fuite de fluide se produit sur la conduite 30, les caractéristiques électriques du câble 1 agencé à proximité sont modifiées et une discontinuité de son impédance peut être détectée par le dispositif de détection 10.

Tel que représenté à la figure 2, le câble 11 peut également localement s'étendre en formant une spirale autour d'une conduite 30. Un tel agencement peut être plus particulièrement adapté pour couvrir des zones de la conduite 30 présentant des risques importants de fuites telles que des raccords ou des coudes 35 de la conduite 30.

En dehors de la zone du coude 35 de la conduite 30, le câble 11 peut alors s'étendre parallèlement le long de la conduite 30 ou encore s'étendre sous la forme d'une spirale dont le pas est plus grand que celui de la spirale dans la zone du coude 35.

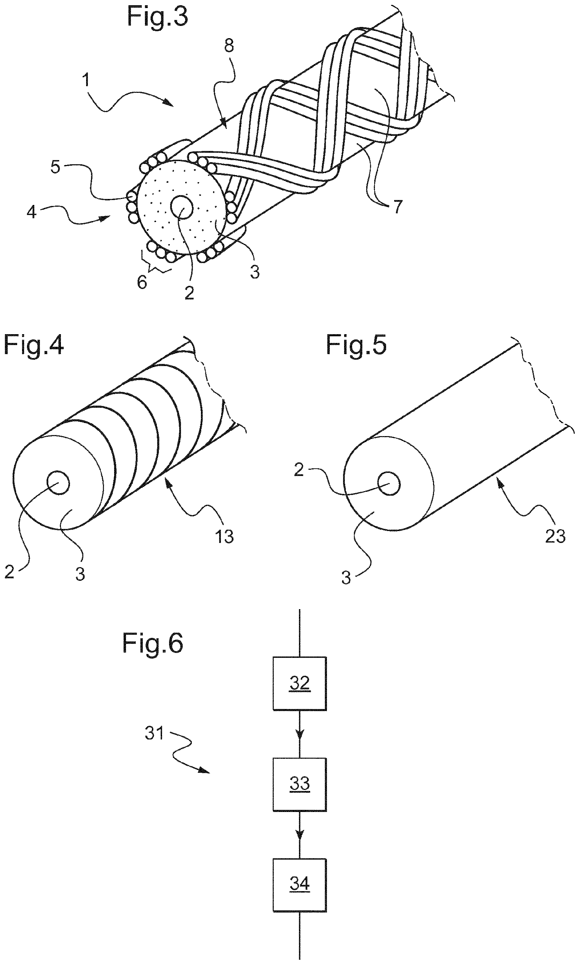

Tel que représenté à la figure 3, un tel câble 1 comporte une âme centrale 2 conductrice de l'électricité permettant la transmission d'impulsions de test et des impulsions réfléchies par le câble 1. Une telle âme centrale 2 est formée par exemple par un monofilament de cuivre.

L'âme centrale 2 est recouverte d'un diélectrique 3 isolant de l'électricité et formé dans un matériau spécifique se transformant à une température supérieure à 300°C. Ainsi, tant que la température environnant le câble 1 est inférieure à 300°C, le diélectrique reste à un état solide et les caractéristiques électriques du câble 1, telles que notamment son impédance, restent stables dans le temps.

A partir d'une température de seuil supérieure à 300°C, typiquement par exemple à 325°C, le matériau du diélectrique peut changer d'état en passant de l'état solide à un état liquide ou visqueux pouvant alors fluer entre les interstices d'une tresse de blindage 4 ajourée recouvrant partiellement une face 8 cylindrique externe du diélectrique 3.

Une telle tresse de blindage 4 peut alors comporter une pluralité d'ouvertures 7 et recouvrir le diélectrique 3 avec un taux de recouvrement compris entre 30 et 50%. En effet, un tel taux de recouvrement garantit à la fois une bonne tenue mécanique du câble 1 lors de son utilisation sur un aéronef notamment et une bonne réactivité pour transmettre presque instantanément une variation de température du milieu environnant le câble 1.

Telle que représentée, la tresse de blindage 4 peut comporter six fuseaux 6 de trois brins 5, ces fuseaux 6 étant tressés entre eux autour de la face 8 du diélectrique 3 pour former les ouvertures 7 laissant visible la face 8 du diélectrique 3.

A titre de variante, les trois brins d'un même fuseau peuvent être eux-mêmes tressés pour un meilleur comportement mécanique à la surface 8 du câble 1.

Tel que représenté aux figures 4 et 5, selon deux exemples de réalisation distincts d'un diélectrique 3, différentes solutions techniques peuvent permettre de positionner le diélectrique 3 autour de l'âme centrale 2.

En effet tel que représenté à la figure 4 selon un premier exemple de réalisation, le diélectrique 3 peut être formé par un ruban 13 enroulé en formant une spirale autour de l'âme centrale 2.

Selon un deuxième exemple de réalisation tel que représenté à la figure 5, le diélectrique 3 peut également être formé par un tube creux 23 extrudé autour de l'âme centrale 2.

Telle que représentée à la figure 6, l'invention concerne également un procédé de détection 31 qui permet de détecter une fuite de fluide le long d'une conduite 30 de fluide. Un tel procédé de détection 31 est alors mis en œuvre par le dispositif de détection 10 tel que décrit à la figure 1.

En outre, un tel procédé de détection 31 comporte :
- une étape d'émission 32 lors de laquelle est émise une impulsion de test dans le câble 1.
- une étape de réflexion 33 lors de laquelle est réfléchie au moins partiellement l'impulsion de test par ledit câble 1, puis
- une étape d'analyse 34 lors de laquelle on analyse l'impulsion réfléchie, pour identifier une discontinuité d'impédance dans le câble 1 et déterminer la position dans le câble 1 de cette discontinuité d'impédance.

L'étape d'émission 32 est réalisée au moyen du réflectomètre temporel 27 comportant un générateur d'impulsions.

L'étape de réflexion 33 est quant à elle opérée par le câble 1 qui permet de générer une impulsion réfléchie à partir de l'onde de test.

Enfin l'étape d'analyse 34 est réalisée par le réflectomètre 27 comportant un module d'analyse qui peut par exemple identifier une discontinuité d'impédance obtenue par une transformation du matériau formant le diélectrique 3 du câble 1. Une telle transformation du matériau se produisant à une température supérieure à 300°C correspondant à une fuite de fluide s'échappant de la conduite 30.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Câble électrique coaxial (1, 11) comportant une âme centrale (2) conductrice de l'électricité, un diélectrique (3) isolant de l'électricité recouvrant ladite âme centrale (2) et une tresse de blindage (4) conductrice de l'électricité recouvrant ledit diélectrique (3),
ledit diélectrique (3) étant formé dans un matériau apte à se transformer à une température supérieure à 300°C et ladite tresse de blindage (4) comportant un taux de recouvrement compris entre 30 et 50%, ledit diélectrique (3) comporte une épaisseur comprise entre 0,01 et 2 mm pour ajuster une rapidité de détection de la température du milieu environnant à proximité du câble électrique coaxial (1, 11),
**caractérisé en ce que** ledit diélectrique (3) est formé dans un matériau non-poreux et la tresse de blindage (4) est ajourée au niveau de croissements entre ses brins formant une couche poreuse permettant, en cas de fuite de fluide, une transmission rapide de la chaleur du fluide au diélectrique (3).

2. Câble selon la revendication 1,
**caractérisé en ce que** ledit matériau formant ledit diélectrique (3) est du Polytétrafluoroéthylène (PTFE).

3. Câble selon l'une quelconque des revendications 1 à 2,
**caractérisé en ce que** ledit diélectrique (3) est formé par un ruban (23) enroulé autour de ladite âme centrale (2).

4. Câble selon l'une quelconque des revendications 1 à 2, **caractérisé en ce que** ledit diélectrique (3) est formé par un tube creux (13) extrudé autour de ladite âme centrale (2).

5. Câble selon l'une quelconque des revendications 1 à 4,
**caractérisé en ce que** ladite tresse de blindage (4) comporte une pluralité de brins (5) tressés entre eux, chaque brin (5) étant formé par un fil de cuivre étamé.

6. Câble selon l'une quelconque des revendications 1 à 5,
**caractérisé en ce que** ladite tresse de blindage (4) comporte x fuseaux (6) tressés entre eux composés chacun de y brins (5), le nombre x de fuseaux (6) étant compris entre 6 et 10 fuseaux et le nombre y de brins (5) de chaque fuseau (6) étant compris entre 3 et 10 brins (5).

7. Câble selon l'une quelconque des revendications 1 à 6,
**caractérisé en ce que** ladite tresse de blindage (4) comporte une pluralité de brins (5) tressés entre eux, chaque brin (5) comportant un diamètre compris entre 0,05 et 0,25 mm.

8. Dispositif de détection (10) pour détecter une fuite de fluide le long d'une conduite (30) de fluide, ladite conduite (30) de fluide permettant la circulation d'un fluide caloporteur sur un aéronef (21), ledit dispositif de détection (10) comportant au moins un réflectomètre temporel (27),
**caractérisé en ce que** ledit dispositif de détection (10) comporte au moins un câble (1, 11) selon l'une quelconque des revendications 1 à 7, ledit câble (1, 11) comportant une bague de connexion (24) agencée au niveau d'une première extrémité (25) dudit câble (1, 11), ladite bague de connexion (24) permettant de connecter électriquement ledit réflectomètre temporel (27) avec ledit câble (1, 11) pour émettre une impulsion de test dans ledit câble (1, 11) et analyser une impulsion réfléchie par ledit câble (1, 11), ledit câble (1, 11) s'étendant le long et à proximité de ladite conduite (30) de fluide et comportant une seconde extrémité libre (26).

9. Dispositif de détection selon la revendication 8,
**caractérisé en ce que** ledit câble (1) s'étend parallèlement par rapport à ladite conduite (30) de fluide.

10. Dispositif de détection selon la revendication 8,
**caractérisé en ce que** ledit câble (11) s'étend en formant une spirale autour de ladite conduite (30) de fluide.

11. Procédé de détection (31) pour détecter une fuite de fluide le long d'une conduite (30) de fluide au moyen d'un dispositif de détection (10) selon l'une quelconque des revendications 8 à 10,
**caractérisé en ce que** ledit procédé de détection (31) comporte :
- une étape d'émission (32) pour émettre une impulsion de test dans ledit câble (1, 11), ladite étape d'émission (32) étant réalisée au moyen dudit réflectomètre temporel (27),
- une étape de réflexion (33) pour réfléchir au moins partiellement ladite impulsion de test et générer ladite impulsion réfléchie par ledit câble (1, 11), puis
- une étape d'analyse (34) pour analyser l'impulsion réfléchie, pour identifier une discontinuité d'impédance dans ledit câble (1, 11) ainsi que pour déterminer une position dans ledit câble (1, 11) de ladite discontinuité d'impédance.

12. Procédé selon la revendication 11,
**caractérisé en ce que** ladite discontinuité d'impédance est obtenue par une transformation du matériau formant le diélectrique (3) dudit câble (1, 11), ladite transformation du matériau se produisant à une température supérieure à 300°C.

13. Giravion (21) équipé d'un groupe de motorisation (20), **caractérisé en ce que** ce giravion (21) comporte au moins un dispositif de détection (10) selon la revendication 8, la conduite (30) de fluide étant installée à bord du giravion (21) à partir du groupe de motorisation (20).

14. Giravion (21) selon la revendication 13, **caractérisé en ce qu'**au moins une conduite (30) de fluide comporte une pluralité de tronçons de conduite et de raccordements entre différents tronçons de la conduite (30).

## Patentansprüche

1. Elektrisches Koaxialkabel (1, 11) mit einem elektrisch leitenden zentralen Kern (2), einem elektrisch isolierenden Dielektrikum (3), das den zentralen Kern (2) bedeckt, und einem elektrisch leitenden Abschirmgeflecht (4), das das Dielektrikum (3) bedeckt,
wobei das Dielektrikum (3) aus einem Material gebildet ist, das bei einer Temperatur von mehr als 300°C umwandelbar ist, und das Abschirmgeflecht (4) eine Überdeckungsverhältnis zwischen 30 und 50% aufweist, wobei das Dielektrikum (3) eine Dicke zwischen 0,01 und 2 mm aufweist, um eine Geschwindigkeit der Erfassung der Temperatur der Umgebung in der Nähe des elektrischen Koaxialkabels (1, 11) einzustellen,
**dadurch gekennzeichnet, dass** das Dielektrikum (3) aus einem nicht porösen Material gebildet ist und das Abschirmgeflecht (4) an den Kreuzungen zwischen seinen Litzen durchbrochen ist, wodurch eine poröse Schicht gebildet wird, die im Falle eines Fluidlecks eine schnelle Wärmeübertragung von dem Fluid auf das Dielektrikum (3) ermöglicht.

2. Kabel nach Anspruch 1,
**dadurch gekennzeichnet, dass** das das Dielektrikum (3) bildende Material Polytetrafluorethylen (PTFE) ist.

3. Kabel nach einem der Ansprüche 1 bis 2,
**dadurch gekennzeichnet, dass** das Dielektrikum (3) durch ein um den zentralen Kern (2) gewickeltes Band (23) gebildet ist.

4. Kabel nach einem der Ansprüche 1 bis 2,
**dadurch gekennzeichnet, dass** das Dielektrikum (3) durch ein um den zentralen Kern (2) herum extrudiertes hohles Rohr (13) gebildet ist.

5. Kabel nach einem der Ansprüche 1 bis 4,
**dadurch gekennzeichnet, dass** das Abschirmgeflecht (4) eine Mehrzahl von miteinander verflochtenen Litzen (5) umfasst, wobei jede Litze (5) durch einen verzinnten Kupferdraht gebildet ist.

6. Kabel nach einem der Ansprüche 1 bis 5,
**dadurch gekennzeichnet, dass** das Abschirmgeflecht (4) x miteinander verflochtene Stränge (6) umfasst, die jeweils aus y Adern (5) bestehen, wobei die Anzahl x der Stränge (6) zwischen 6 und 10 Strängen und die Anzahl y der Adern (5) jedes Strangs (6) zwischen 3 und 10 Adern (5) liegt.

7. Kabel nach einem der Ansprüche 1 bis 6,
**dadurch gekennzeichnet, dass** das Abschirmgeflecht (4) eine Mehrzahl von miteinander verflochtenen Adern (5) umfasst, wobei jede Ader (5) einen Durchmesser zwischen 0,05 und 0,25 mm aufweist.

8. Detektionsvorrichtung (10) zum Detektieren eines Fluidlecks entlang einer Fluidleitung (30), wobei die Fluidleitung (30) die Zirkulation eines Wärmeträgerfluids in einem Flugzeug (21) ermöglicht, wobei die Detektionsvorrichtung (10) mindestens ein Zeitreflektometer (27) umfasst,
**dadurch gekennzeichnet, dass** die Detektionsvorrichtung (10) mindestens ein Kabel (1, 11) nach einem der Ansprüche 1 bis 7 umfasst, wobei das Kabel (1, 11) einen Verbindungsring (24) umfasst, der an einem ersten Ende (25) des Kabels (1, 11) angeordnet ist, dass der Verbindungsring (24) es ermöglicht, das Zeitreflektometer (27) mit dem Kabel (1, 11) elektrisch zu verbinden, um einen Testimpuls in das Kabel (1, 11) zu emittieren und einen von dem Kabel (1, 11) reflektierten Impuls zu analysieren, und dass sich das Kabel (1, 11) entlang und in der Nähe der Fluidleitung (30) erstreckt und ein freies zweites Ende (26) aufweist.

9. Detektionsvorrichtung nach Anspruch 8,
**dadurch gekennzeichnet, dass** das Kabel (1) parallel zu der Fluidleitung (30) verläuft.

10. Detektionsvorrichtung nach Anspruch 8,
**dadurch gekennzeichnet, dass** sich das Kabel (11) in einer Spirale um die Fluidleitung (30) herum erstreckt.

11. Detektionsverfahren (31) zum Detektieren einer Fluidleckage entlang einer Fluidleitung (30) mit Hilfe einer Detektionsvorrichtung (10) nach einem der Ansprüche 8 bis 10,
**dadurch gekennzeichnet, dass** das Nachweisverfahren (31) umfasst:
- einen Emissionsschritt (32) zum Emittieren eines Testimpulses in das Kabel (1, 11), wobei der Emissionsschritt (32) mit Hilfe des Zeitreflektometers (27) durchgeführt wird,
- einen Reflexionsschritt (33) zum zumindest teilweisen Reflektieren des Testimpulses und zum Erzeugen des von dem Kabel (1, 11) reflektierten Impulses, dann
- einen Analyseschritt (34) zum Analysieren des reflektierten Impulses, um eine Impedanzdiskontinuität in dem Kabel (1, 11) zu identifizieren und um eine Position der Impedanzdiskontinuität in dem Kabel (1, 11) zu bestimmen.

12. Verfahren nach Anspruch 11,
**dadurch gekennzeichnet, dass** die Impedanzdiskontinuität durch eine Transformation des das Dielektrikum (3) des Kabels (1, 11) bildenden Materials erhalten wird, wobei die Transformation des Materials bei einer Temperatur über 300°C stattfindet.

13. Drehflügelflugzeug (21), ausgestattet mit einem Antriebsaggregat (20),
**dadurch gekennzeichnet, dass** das Drehflügelflugzeug (21) mindestens eine Detektionsvorrichtung (10) nach Anspruch 8 aufweist, wobei die Fluidleitung (30) an Bord des Drehflügelflugzeugs (21) ausgehend von dem Antriebsaggregat (20) installiert ist.

14. Drehflügelflugzeug (21) nach Anspruch 13, **dadurch gekennzeichnet, dass** mindestens eine Fluidleitung (30) eine Mehrzahl von Leitungsabschnitten und von Verbindungen zwischen verschiedenen Abschnitten der Leitung (30) umfasst.

## Claims

1. Coaxial electric cable (1, 11) including an electrically conductive central core (2), an electrically insulating dielectric (3) covering said central core (2) and an electrically conductive shielding braid (4) covering said dielectric (3), said dielectric (3) being formed of a material capable of being transformed at a temperature above 300°C and said shielding braid (4) comprising a coverage rate of between 30 and 50%, said dielectric (3) has a thickness between 0.01 and 2 mm in order to adjust a speed of detection of the temperature of the surrounding environment in the vicinity of the coaxial electric cable (1, 11), **characterised in that** said dielectric (3) is formed of a nonporous material and the shielding braid (4) is openworked at the crossings between its strands, forming a porous layer which, in case of a fluid leak, enables heat to be transmitted rapidly from the fluid to the dielectric (3).

2. Cable according to claim 1, **characterised in that** said material forming said dielectric (3) is polytetrafluoroethylene (PTFE).

3. Cable according to either claim 1 or claim 2, **characterised in that** said dielectric (3) is formed by a tape (23) wound around said central core (2).

4. Cable according to either claim 1 or claim 2, **characterised in that** said dielectric (3) is formed by a hollow tube (13) extruded around said central core (2).

5. Cable according to any of claims 1 to 4, **characterised in that** said shielding braid (4) includes a plurality of strands (5) braided together, each strand (5) being formed by a tinned copper wire.

6. Cable according to any of claims 1 to 5, **characterised in that** said shielding braid (4) includes x groups (6) braided together, each composed of y strands (5), the number x of groups (6) being between 6 and 10 groups and the number y of strands (5) of each group (6) being between 3 and 10 strands (5).

7. Cable according to any of claims 1 to 6, **characterised in that** said shielding braid (4) includes a plurality of strands (5) braided together, each strand (5) having a diameter between 0.05 and 0.25 mm.

8. Detection device (10) for detecting a fluid leak along a fluid line (30), said fluid line (30) enabling a heat transfer fluid to circulate on an aircraft (21), said detection device (10) including at least one time domain reflectometer (27), **characterised in that** said detection device (10) includes at least one cable (1, 11) according to any of claims 1 to 7, said cable (1, 11) including a connection ring (24) arranged at a first end (25) of said cable (1, 11), said connection ring (24) enabling said time domain reflectometer (27) to be electrically connected to said cable (1, 11) in order to transmit a test pulse into said cable (1, 11) and to analyse a pulse reflected by said cable (1, 11), said cable (1, 11) extending along and in the vicinity of said fluid line (30) and comprising a second free end (26).

9. Detection device according to claim 8, **characterised in that** said cable (1) extends in parallel with said fluid line (30).

10. Detection device according to claim 8, **characterised in that** said cable (11) extends so as to form a spiral around said fluid line (30).

11. Detection method (31) for detecting a fluid leak along a fluid line (30) by means of a detection device (10) according to any of claims 8 to 10, **characterised in that** said detection method (31) includes:
- a transmission step (32) for transmitting a test pulse into said cable (1, 11), said transmission step (32) being performed by means of said time domain reflectometer (27),
- a reflection step (33) for at least partially reflecting said test pulse and generating said pulse reflected by said cable (1, 11), then
- an analysis step (34) for analysing the reflected pulse in order to identify an impedance discontinuity in said cable (1, 11) and to determine a position in said cable (1, 11) of said impedance discontinuity.

12. Method according to claim 11, **characterised in that** said impedance discontinuity is obtained by a transformation of the material forming the dielectric (3) of said cable (1, 11), said transformation of the material occurring at a temperature above 300°C.

13. Rotorcraft (21) provided with an engine group (20), **characterised in that** this rotorcraft (21) includes at least one detection device (10) according to claim 8, the fluid line (30) being installed on board the rotorcraft (21) from the engine group (20).

14. Rotorcraft (21) according to claim 13, **characterised in that** at least one fluid line (30) includes a plurality of line sections and connections between different sections of the line (30).
